# EUROPÄISCHE PATENTANMELDUNG

(11) **EP 0 836 006 A2**
(43) Veröffentlichungstag der Anmeldung: **15.04.1998**
(21) Anmeldenummer: 97114895.2
(22) Anmeldetag: 28.08.1997
(51) Int. Cl.: F04B 53/14

(54) **Kolbenpumpe**

(30) Priorität: 10.10.1996 DE 19641778
(71) Anmelder: ROBERT BOSCH GMBH, 70442 Stuttgart (DE)
(72) Erfinder: Siegel, Heinz, Ing. (grad.), 70435 Stuttgart (DE)

(57) **Zusammenfassung**

Bei einer Kolbenpumpe zum Fördern von Hydraulikflüssigkeit, insbesondere für ABS-Bremsanlagen, mit mindestens einem zur axialen Hubbewegung antreibbaren Pumpenkolben (13), der mit einer an seinem Umfang ausgebildeten Gleitfläche (14) an der Innenwand (121) eine Führungsbohrung (12) gleitet, ist zur Gewährleistung einer guten Gleitreibung zwischen Pumpenkolben (13) und Führungsbohrung (12) zwecks Geräuschreduzierung und Erzielung hoher Standzeiten für die Dichtung (17) die Gleitfläche (14) im Längsschnitt des Pumpenkolbens (13) gesehen wellenförmig ausgebildet, wobei Wellenberge (32) und Wellentäler (33) in Längsrichtung des Pumpenkolbens (13) aufeinanderfolgen.

## Beschreibung

### Stand der Technik

Die Erfindung betrifft eine Kolbenpumpe zum Fördern von Hydraulikflüssigkeit, insbesondere für Fahrzeugbremsanlagen mit Blockierschutz, der im Oberbegriff des Anspruchs 1 definierten Gattung.

Bei einer bekannten Kolbenpumpe dieser Art (WO 95/16859 A1) ist zur Senkung der Fertigungskosten die Führungsbohrung für den Pumpenkolben unmittelbar im Pumpenkörper, d.h. ohne Verwendung eines separat in dem Pumpenkörper eingesetzten Pumpenzylinders zur Gleitführung des Pumpenkolbens, ausgebildet. Zur Abdichtung des Pumpenkolbens gegenüber der Innenwand der Führungsbohrung ist eine Hochdruckdichtung vorgesehen, die als Ringdichtung aus Polytetrafluorethylen (PTFE) ausgebildet sowie auf einem Absatz des Pumpenkolbens aufgenommen ist und sich in Achsrichtung an der Radialschulter des Absatzes abstützt. Der Wegfall des als Gleitbuchse wirkenden Pumpenzylinders macht es erforderlich, Maßnahmen zu treffen, um eine Beschädigung oder starke Abnutzung der Gleitfläche am Pumpenkolben und der Dichtungsfläche an der Ringdichtung langfristig zu verhindern, insbesondere wenn der Pumpenkörper zur Fertigungskostensenkung aus Aluminium hergestellt wird. Eine solche Maßnahme ist beispielsweise das Eloxieren des Pumpenkörpers.

### Vorteile der Erfindung

Die erfindungsgemäße Kolbenpumpe mit den kennzeichnenden Merkmalen des Anspruchs 1 hat demgegenüber den Vorteil, daß der Pumpenkörper aus Aluminium nicht zusätzlich bearbeitet werden muß. Durch das Wellenprofil an der Oberfläche des Pumpenkolbens sind dessen die Innenwand der Führungsbohrung berührende, umlaufende, schmalen Berührungsbereiche ballig, weisen also keine Kanten auf. Diese balligen Berührungsbereiche wirken wie ein Kalibrierwerkzeug glättend auf die Innenwand der Führungsbohrung, so daß die auch eine Gleitfläche für eine evtl. vom Pumpenkolben getragene Dichtung darstellende Innenwand ständig geglättet wird, wodurch die Haltbarkeit der Dichtung erheblich vergrößert wird. Durch die minimalen, balligen Berührungsbereiche zwischen Innenwand der Führungsbohrung und Oberfläche des Pumpenkolbens und durch die dazwischenliegenden Wellentäler entsteht eine sehr gute Schmierwirkung durch die geförderte Hydraulikflüssigkeit. Das erfindungsgemäße Wellenprofil kann sehr genau im Durchmesser durch Einstechschleifen hergestellt werden, wobei auch gleichzeitig die Oberfläche des Pumpenkolbens sehr glatt wird.

Durch die in den weiteren Ansprüchen aufgeführten Maßnahmen sind vorteilhafte Weiterbildungen und Verbesserungen der im Anspruch 1 angegebenen Kolbenpumpe möglich.

Gemäß einer bevorzugten Ausführungsform der Erfindung weist das Material der wellenförmigen Gleitfläche des Pumpenkolbens eine wesentlich größere Härte auf als das Material der Führungsbohrung, was beispielsweise dadurch realisiert werden kann, daß der Pumpenkolben aus gehärtetem Stahl gefertigt wird oder nur die wellenförmige Gleitfläche, z.B. durch Nitrieren, Nitrokarbonieren, Randschichthärten oder dgl., gehärtet wird.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt einer Kolbenpumpe für eine Fahrzeugbremsanlage mit Blockierschutz,
- Fig. 2: eine vergrößerte Darstellung des Ausschnitts II in Fig. 1.

### Beschreibung des Ausführungsbeispiels

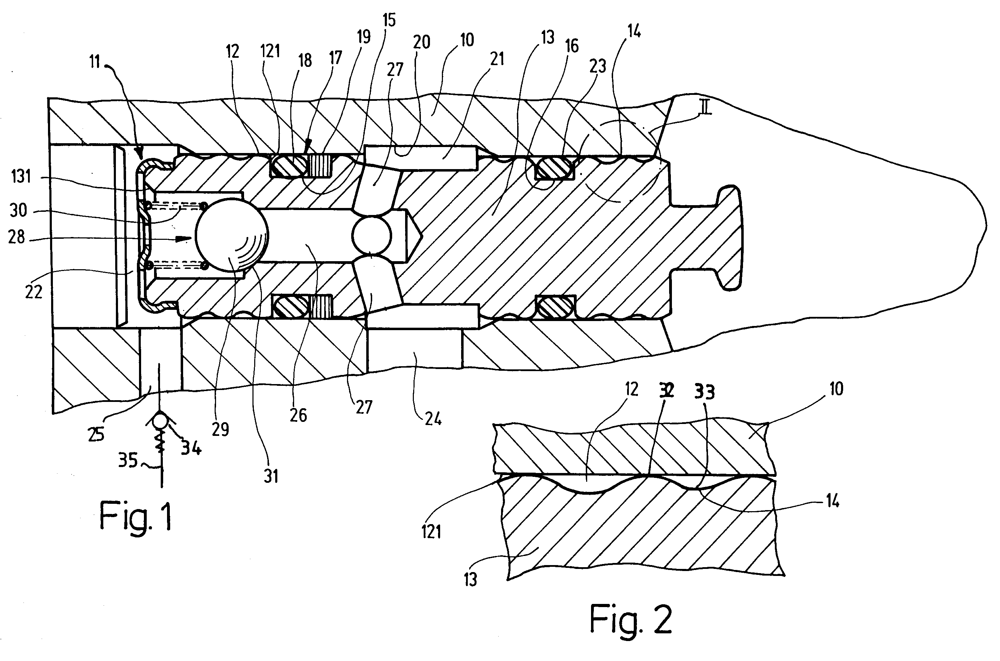

Die in Fig. 1 ausschnittweise im Längsschnitt dargestellte Kolbenpumpe dient zum Fördern von Hydraulikflüssigkeit in einer Fahrzeugbremsanlage mit Blockierschutz, einer sog. ABS-Bremsanlage. Sie weist einen Pumpenkörper 10 aus Leichtmetall oder einer Leichtmetallegierung auf, in dem ein Pumpenraum 11 mit einer Führungsbohrung 12 für einen Pumpenkolben 13 ausgebildet ist. Als Material für den Pumpenkörper 10 wird bevorzugt Aluminium oder eine Aluminiumlegierung verwendet. Üblicherweise sind in dem Pumpenkörper 10 mehrere Pumpenräume mit Führungsbohrungen für jeweils einen Pumpenkolben vorhanden, die aus Gründen der Übersichtlichkeit aber nicht dargestellt sind. Der durch einen hier nicht dargestellten Antrieb eine hin- und hergehende Hubbewegung ausführende Pumpenkolben 13 gleitet mit einer an seinem Umfang ausgebildeten Gleitfläche 14 an der Innenwand 121 der Führungsbohrung 12.

Der Pumpenkolben 13 trägt zwei im Axialabstand voneinander angeordnete Ringnuten 15 und 16. In die Ringnut 15 ist eine Hochdruckdichtung 17 eingesetzt, die aus einer ringförmigen Elastomerdichtung 18 und einem Stützring 19 besteht. Die Hochdruckdichtung 17 unterteilt den Pumpenraum 11 im Bereich der Führungsbohrung 12 in eine Pumpenkammer 21 und in eine Pumpenkammer 22 mit jeweils variablem Kammervolumen. Für die Ausbildung der den Pumpenkolben 13 ringförmig umschließenden Pumpenkammer 21 ist entweder in die Führungsbohrung 12 eine Ringnut 20 eingestochen oder der Durchmesser des Pumpenkolbens 13 im Abschnitt zwischen den beiden Ringnuten 15,16 reduziert. In dem in Fig. 1 dargestellten Ausführungsbeispiels der Kolbenpumpe ist beides ausgeführt. Die als Saugkammer wirkende Pumpenkammer 21 wird durch einen in die Ringnut 16 im Pumpenkolben 13 eingesetzten Dichtungsring 23 abgedichtet und steht über einen Ansaugkanal 24 mit einem Pumpeneinlaß in Verbindung. Die von der Stirnfläche 131 des Pumpenkolbens 13 begrenzte, als Druckkammer wirkende Pumpenkammer 22 steht über einen Druckkanal 25 mit dem Pumpenauslaß 35 in Verbindung, wobei dem Druckkanal 25 noch ein in Fig. 1 symbolhaft dargestelltes Rückschlagventil 34 zugeordnet ist. Das Rückschlagventil 34 dient als Pumpenauslaßventil und gestattet ein Strömen der Flüssigkeit aus der Pumpenkammer 22 zum Pumpenauslaß 35, sperrt aber die entgegengesetzte Richtung.

Im Pumpenkolben 13 ist von der Stirnfläche 131 her ein zentrale Sackbohrung 26 und im Bereich der Ringnut 20 mindestens eine Radialbohrung 27 eingebracht, die in der Sackbohrung 26 mündet. Über die Sackbohrung 26 und die Radialbohrungen 27 wird eine Verbindung zwischen den beiden Pumpenkammern 21,22 hergestellt, die durch ein Rückschlagventil 28 verschließbar ist. Das Rückschlagventil 28 dient als Pumpeneinlaßventil und ist in bekannter Weise von einer Ventilkugel 29 gebildet, die unter der Kraft einer Ventilschließfeder 30 auf einen an der Mündung der Sackbohrung 26 umlaufend ausgebildeten Ventilsitz 31 aufgedrückt wird. Das Rückschlagventil 28 gestattet während einer Hubbewegung des Pumpenkolbens 13 ein Strömen der Flüssigkeit aus dem Ansaugkanal 24 bzw. aus der Pumpenkammer 21 in die Pumpenkammer 22 bzw. zum Druckkanal 25. Während der Rückbewegung des Pumpenkolbens 13 verhindert das Rückschlagventil 28 ein Rückströmen der Flüssigkeit aus der Pumpenkammer 22 zurück in die Pumpenkammer 21.

Wie aus der vergrößerten Darstellung eines Ausschnitts des Pumpenkolbens 13 in Fig. 2 zu erkennen ist, ist die Gleitfläche 14 am Umfang des Pumpenkolbens 13 - im Längsschnitt des Pumpenkolbens 13 gesehen - wellenförmig ausgebildet, wobei Wellenberge 32 und Wellentäler 33 in Achsrichtung des Pumpenkolbens 13 aufeinanderfolgen. Die Wellenberge 32 und Wellentäler 33 weisen gleiche Krümungsradien auf. Durch diese wellenförmige Ausbildung der Gleitfläche 14 liegt der Pumpenkolben 13 nur mit minimalen, balligen Berührungsflächen, die ringförmig um den Pumpenkolben 13 verlaufen, an der Innenwand 121 der Führungsbohrung 12 an, während die Wellentäler 33 mit Hydraulikflüssigkeit gefüllt sind. Diese balligen Berühungsflächen wirken bei der Hubbewegung des Pumpenkolbens 13 wie ein Kalibrierwerkzeug und glätten fortlaufend die Innenwand 121 der Führungsbohrung 12, so daß durch die extrem glatten Gleitflächen zwischen Pumpenkolben 13 und Pumpenkörper 10 nur wenig Reibungsenergie erzeugt wird und der Pumpenkolben 13 leichtgängig und geräuscharm läuft. Durch die ständige Glättung der Innenwand 121 der Führungsbohrung 12 wird auch die Haltbarkeit der Hochdruckdichtung 17 und des als Niederdruckdichtung dienenden Dichtungsrings 23 wesentlich verlängert.

Für diese Glättungswirkung der balligen Bereiche im Wellenprofil der Gleitfläche 14 ist es erforderlich, daß die wellenförmige Gleitfläche 14 eine wesentlich größere Härte aufweist als die Innenwand 121 der Führungsbohrung 12. Dies wird entweder dadurch erzielt, daß der Pumpenkolben 13 aus gehärtetem Stahl gefertigt oder aber auch nur die wellenförmige Gleitfläche 14 gehärtet wird. Eine solche Härtung der Gleitfläche 14 kann beispielsweise durch Nitrieren, Nitrokarbonieren, Randschichthärten, Aufbringen von galvanischen Schichten und dgl., erreicht werden.

Die Erfindung ist nicht auf das vorstehend beschriebene Ausführungsbeispiel beschränkt. So muß die Führungsbohrung 12 nicht unmittelbar im Pumpenkörper 10 ausgebildet werden, sondern kann auch durch einen hülsenförmigen Pumpenzylinder, der in eine entsprechende Ausnehmung im Pumpenkörper 10 eingesetzt wird, realisiert werden, doch läßt der Verzicht auf diesen Pumpenzylinder die Fertigungskosten sinken.

Des weiteren kann zwischen dem Pumpenkolben 13 und der Innenwand 121 der Führungsbohrung 12 eine enge Spaltdichtung vorgesehen werden, so daß auf die Hochdruckdichtung 17 und/oder auf die als einfacher Dichtungsring 23 ausgeführte Niederdruckdichtung verzichtet werden kann.

## Patentansprüche

1. Kolbenpumpe zum Fördern von Hydraulikflüssigkeit, insbesondere für Fahrzeugbremsanlagen mit Blockierschutz, mit mindestens einem zur axialen Hubbewegung antreibbaren Pumpenkolben (13), der mit einer an seinem Umfang ausgebildeten Gleitfläche (14) an der Innenwand (121) einer Führungsbohrung (12) gleitet, dadurch gekennzeichnet, daß die Gleitfläche (14) im Längsschnitt des Pumpenkolbens (13) gesehen wellenförmig ausgebildet ist, wobei vorzugsweise gleiche Krümmungsradien aufweisende Wellenberge (32) und Wellentäler (33) in Längsrichtung des Pumpenkolbens (13) aufeinanderfolgen.

2. Kolbenpumpe nach Anspruch 1, dadurch gekennzeichnet, daß das Material der wellenförmigen Gleitfläche (14) eine wesentlich größere Härte aufweist als das Material der Innenwand (121) der Führungsbohrung (12).

3. Kolbenpumpe nach Anspruch 2, dadurch gekennzeichnet, daß der Pumpenkolben (13) aus gehärtetem Stahl gefertigt ist.

4. Kolbenpumpe nach Anspruch 1 oder 2, dadurch gekennzeichnet, daß die wellenförmige Gleitfläche (14) gehärtet ist.

5. Kolbenpumpe nach einem der Ansprüche 1 - 4, dadurch gekennzeichnet, daß die Führungsbohrung (12) unmittelbar in einen Pumpenein- und -auslaß aufweisenden Pumpenkörper (10) selbst eingearbeitet ist.

6. Kolbenpumpe nach einem der Ansprüche 1 - 4, dadurch gekennzeichnet, daß die Führungsbohrung (12) von einer Hülse gebildet ist, die in einen Pumpenein- und -auslaß aufweisenden Pumpenkörper eingesetzt ist.

7. Kolbenpumpe nach Anspruch 5 oder 6, dadurch gekennzeichnet, daß der Pumpenkörper (10) aus Leichtmetall oder einer Leichtmetallegierung gefertigt ist.

8. Kolbenpumpe nach einem der Ansprüche 1 - 7, dadurch gekennzeichnet, daß auf dem Umfang des Pumpenkolbens (13) mindestens eine an die Innenwand (121) der Führungsbohrung (12) sich andrückende Ringdichtung (17,23) sitzt.

9. Kolbenpumpe nach einem der Ansprüche 1 - 8, dadurch gekennzeichnet, daß der Pumpenkolben (13) zusammen mit der Führungsbohrung (12) eine ihn ringförmig umgebende Saugkammer (21), die mit einem Pumpeneinlaß in Verbindung steht, und eine durch seine Stirnwand (121) begrenzte Druckkammer (22) einschließt, die mit einem Pumpenauslaß in Verbindung steht, und daß der Pumpenkolben (13) eine die beiden Pumpenkammern (21,22) miteinander verbindende Bohrung (26,27) aufweist, die mittels eines Rückschlagventils (28) verschließbar ist.
